## Europäisches Patentamt
## European Patent Office
## Office européen des brevets

(19)

(11) Veröffentlichungsnummer: **0 336 362 B1**

# EUROPÄISCHE PATENTSCHRIFT

(12)

(45) Veröffentlichungstag der Patentschrift: **23.12.92**

(51) Int. Cl.5: **B65G 13/11**, B65G 13/00, //B65G69/18

(21) Anmeldenummer: **89105872.9**

(22) Anmeldetag: **04.04.89**

(54) **Rollenbahn für Reinräume.**

(30) Priorität: **06.04.88 DE 3811503**

(43) Veröffentlichungstag der Anmeldung:
**11.10.89 Patentblatt 89/41**

(45) Bekanntmachung des Hinweises auf die Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**DD-A- 237 293**
**DE-A- 3 017 942**

(73) Patentinhaber: **TRAPO-Stumpf GmbH**
**Industriestrasse 1**
**W-4423 Gescher 2 (Hochmoor)(DE)**

(72) Erfinder: **Nelles, Wilhelm, Dipl.-Ing.**
**Lohauser Esch 35**
**W-4284 Heiden(DE)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft eine angetriebene Rollenbahn, deren Rollen an einem Gerüst waagerecht oder geneigt gelagert sind.

Es sind Rollenbahnen bekannt, deren Rollenachsen von seitlichen Lagern gehalten werden. So ist beispielsweise aus der deutschen Patentschrift 3017942 eine Friktionsrollenbahn bekannt, deren Antrieb sich seitlich der Rolle befindet. Sowohl diese Antriebe als auch die Oberflächen der Rollen selber erzeugen aufgrund des Abriebes Kleinstpartikel (Staub), die in die Umgebungsluft gelangen und insbesondere die Luft von Reinräumen kontaminieren. Ferner ist aus der DE-A 3 017 942 eine angetriebene Friktionsrollenbahn bekannt, bei der einige Teile des Antriebs von einem Gehäuse umschlossen sind.

Aufgabe der Erfindung ist es, eine Rollenbahn der eingangs genannten Art so zu verbessern, daß keine Partikel an die rein zu haltende Umgebung abgegeben werden.

Diese Aufgabe wird erfindungsgemäß dadurch gelöst, daß alle Antriebsteile zwischen dem antreibenden Motor und den Rollen von einem Gehäuse oder von einem Hohlprofil des Gerüsts insbesondere von einer hohlen Stütze und/oder von einem hohlen Träger allseitig umschlossen ist (sind), an denen oder deren Innerem Unterdruck anliegt.

Durch die geschlossene Bauweise sind die Antriebe von einem Gehäuse umgeben, aus dem durch Unterdruck alle entstehenden Partikel abgesaugt werden. Damit können an die rein zuhaltende Umgebung keine Partikel abgegeben werden und die Rollenbahn eignet sich insbesondere für Reinräume.

Eine besonders einfache und wirksame Konstruktion wird dadurch erreicht, daß das Gerüst geschlossene Hohlprofile aufweist, die an eine Absaugung angeschlossen sind. Hierzu können auch die Lager der Rollen von geschlossenen Gehäusen oder Profilen umgeben sein, an denen Unterdruck anliegt. Besonders vorteilhaft ist es, wenn die Stützen und/oder Streben des Gerüsts Hohlprofile sind, in deren Innerem durch Absaugen Unterdruck anliegt.

Um die von den Rollen erzeugten Abriebpartikel sicher aufzunehmen, wird vorgeschlagen, daß unterhalb der Rollen eine oder mehrere Wannen befestigt sind, in deren oberer Öffnung die Rollen liegen und in deren unterem Bereich Unterdruck herrscht. Hierbei ist es besonders vorteilhaft, wenn der überwiegende Teil der Öffnungsfläche der Wanne durch die Rollen ausgefüllt ist. Durch eine solch enge Rollenteilung erreicht man kleine Spaltabstände zwischen den Rollen, was zu einer hohen Strömungsgeschwindigkeit an den Rollenoberflächen führt, so daß alle Partikel vom Absaugsystem aufgenommen werden.

Besonders vorteilhaft ist es, wenn mindestens eine hohle Stütze durch den Boden in den darunterliegenden Raum geführt und dort an Unterdruck angeschlossen ist. Hierbei kann in der hohlen Stütze der Antrieb für die Rollen insbesondere eine Endloskette, ein Endlosriemen oder eine Welle einliegen. Auch sollte der Motor des Antriebs im darunterliegenden Raum angeordnet sein.

Eine weitere Sicherheit gegen austretende Partikel wird dadurch geschaffen, daß die Lager der Rollen beidseitig durch Abdichtungsringe abgedichtet sind. Um zu verhindern, daß bei einem Stau von zu förderndem Gut die Rollen unter dem Gut weiterdrehen und damit besonders stark Abriebpartikel erzeugen, wird vorgeschlagen, daß das die Rolle antreibende Rad über eine Rutschkupplung mit der Rolle verbunden ist und sowohl Rad als auch Rutschkupplung vom durch Absaugen entstehenden Unterdruck umgeben sind. Hierbei kann auf einer Seite die mit dem Rollenzylinder drehfeste Achse über das Lager verlängert sein und das Antriebsrad tragen.

Besonders vorteilhaft ist es, wenn der Rollenmantel von einer Schicht umgeben ist, die im Bedarfsfall elektrisch leitfähig ausgebildet sein kann und die auf beiden Seiten bis zu den Lagerringen reicht. Das verwendete Beschichtungsmaterial kann von der Zusammensetzung her variiert werden und somit auf die speziellen Anwendungsbereiche angepaßt werden. Darüberhinaus kann eine geeignete Beschichtung Geräuschentwicklung reduzieren und sich schonend auf das Fördergut auswirken.

Von Vorteil ist es auch, wenn an etwa jeder Rollenachse ein kleiner Hydraulikmotor oder Elektromotor, insbesondere ein Gleichstrommotor, als Antrieb installiert wird. Eine einfache Konstruktion bei sicherer Aufnahme der Partikel wird dann erreicht, wenn die Wandung der Wanne zu den Rollenenden hochgeführt ist und die Rollenlager umgebende Gehäuse bilden. Hierbei kann das Gehäuse in Höhe der Rollen einen Kanal bilden, der über mindestens eine darunter befestigte Hohlstütze an das Absaugsystem angeschlossen ist.

Eine einfache Montage der Rollenbahn wird dadurch erreicht, daß die senkrechten Stützen im unteren Bereich teleskopartig ineinander schiebbar oder durch spindelförmig ausgebildete Füße einstellbar sind.

Ausführungsbeispiele der Erfindung sind in Zeichnungen dargestellt und werden im folgenden näher beschrieben. Es zeigen:

Figur 1     einen senkrechten Querschnitt durch ein erstes Ausführungsbeispiel,

Figur 2     einen senkrechten Querschnitt durch ein zweites Ausführungsbeispiel,

Figur 3     einen senkrechten Querschnitt durch ein drittes Ausführungsbeispiel,

Figur 4 den oberen Bereich eines senkrechten Querschnittes durch eine Rollenbahnkurve,

Figur 5 eine Draufsicht auf eine Rollenbahnkurve im Ausschnitt.

Die Rollenbahn weist ein Gerüst 1 auf, das einzelne senkrechte Stützen 2 besitzt, die an ihren oberen Enden auf beiden Längsseiten das Rollenbahngehäuse 3 tragen.

Diese Gehäuse können von einem Rechteckhohlprofil gebildet sein oder aber entsprechend dem Ausführungsbeispiel von einem abgekanteten Blech 4, das unterhalb der Rollen 5 eine Wanne 6 bildet, die über gesamte Länge der Rollenbahn verläuft und deren seitlichen Blechränder senkrecht hochgezogen sind um in die Wandung des Gehäuses 3 überzugehen. Dieses Blech 4 kann nach Bildung der Oberseite des Gehäuses 3 und einer seitlichen senkrechten Abkantung 4a enden. Die Unterseite des Gehäuses 3 wird von einem Profilblech 6 gebildet, das rinnenförmig durchläuft und an dessen Unterseite die Hohlstützen 2 befestigt sind.

Zwischen der Abkantung 4a und dem äußeren Schenkel des Bleches 6 wird die äußere Seitenwand des Gehäuses 3 von einem Stirndeckel 7 gebildet, der abnehmbar eingesetzt ist um das Innere des Gehäuses 3 zu erreichen.

Zwischen beiden Gehäusen 3 befinden sich die Rollen 5, wobei deren Lager 9 sich innerhalb der Gehäuse 3 befinden. Beide Lager 3 einer Rolle 5 sind beidseitig durch Abdichtungsringe abgedichtet und auf der Antriebsseite läuft die Achse 10 durch das Lager 3 hindurch, um auf ihrem freien Ende das Antriebsrad 11 zu tragen. Die Achse 10 bildet mit einem geformten stirnseitigen Zylinderdeckel oder Rollenendformstück 12 eine Einheit, die auf der der Achse 10 abgewandten Seite den Mantel 13 der Rolle 5 trägt. Auf dem Mantel 13 kann eine Beschichtung aufgetragen sein, die im Bedarfsfall elektrisch leitend ausgebildet ist und die auch die beiden Endstücke 12 bedeckt und damit bis zum Innenring des jeweiligen Lagers 9 reicht.

Die Stützen 2 sind durch Querholme 15 miteinander verbunden, wobei Stützen und Querholme aus Hohlprofilen bestehen. An den Befestigungsstellen zwischen den Holmenstützen und Gehäusen befinden sich Öffnungen 16, so daß die Hohlräume des Gerüsts miteinander verbunden sind und abgesaugt werden können. Die Wanne 6 ist an ihrer tiefsten Stelle über ein Rohr 17 mit dem oberen Querholm 15 verbunden, so daß über die Stütze 2 und den Querholm 15 die Wanne 6 abgesaugt werden kann. Der obere Öffnungsbereich der Wanne 6 ist durch die eng beieinanderliegenden Rollen 5 abgedeckt, deren Teilung so gewählt ist, daß nur ein geringer Teil des oberen Öffnungsbereiches frei ist.

Die senkrechten Stützen 2 enden vor dem Boden bzw. der Decke 18, auf der das Gerüst 1 steht. In der Unterseite sind Hohlstützen 19 geringen Durchmessers eingesteckt und durch eine Klemmverbindung gehalten. Nach exakter Lage des Gerüstes ist der Ringraum zwischen beiden Profilen der Stütze versiegelt.

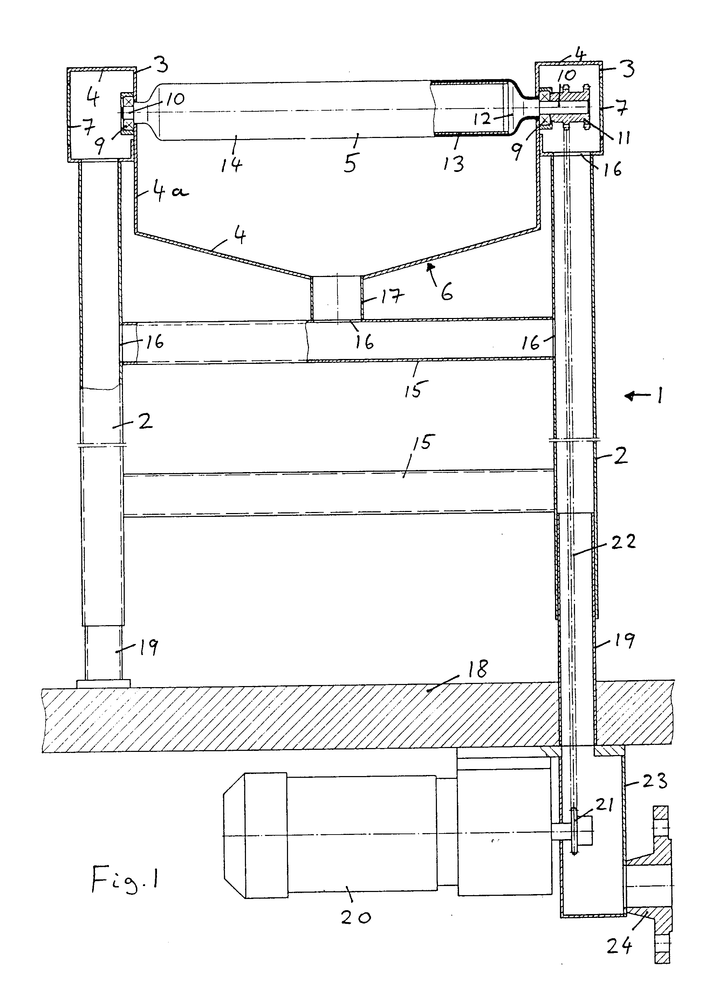

Im Ausführungsbeispiel nach Figur 1 befindet sich der Antrieb 20 unterhalb der Decke 18. Vom Antriebsrad 21 des Antriebs 20 läuft eine Kette, ein Riemen 22 oder eine Welle durch die Stütze 2, 19 nach oben bis zum Antriebsrad 11. Das Antriebsrad 21 ist auch von einem Gehäuse 23 umgeben, an dem der Absaugflansch 24 befestigt ist.

Jede der Rollen 5 kann einzeln angetrieben sein, wobei dann vorzugsweise an jedem Rollenende ein Elektro-Gleichstrommotor kleiner Bauweise oder ein Hydraulikmotor befestigt ist. Im Ausführungsbeispiel nach Figur 1 ist nicht jede Rolle 5 angetrieben sondern das Antriebsrad 11 weist außen ein weiteres Kettenrad, Zahnrad oder Riemenrad auf, durch das benachbarte Rollen über Riemen, Kette, Welle oder Zwischenrad angetrieben werden können. Zwischen Antriebsrad 11 und Achse 10 befindet sich eine nicht dargestellte Rutschkupplung, so daß bei einem Stocken des transportierten Gutes die Rolle 5 stehenbleiben kann, auch wenn sich das Antriebsrad 11 weiterdreht.

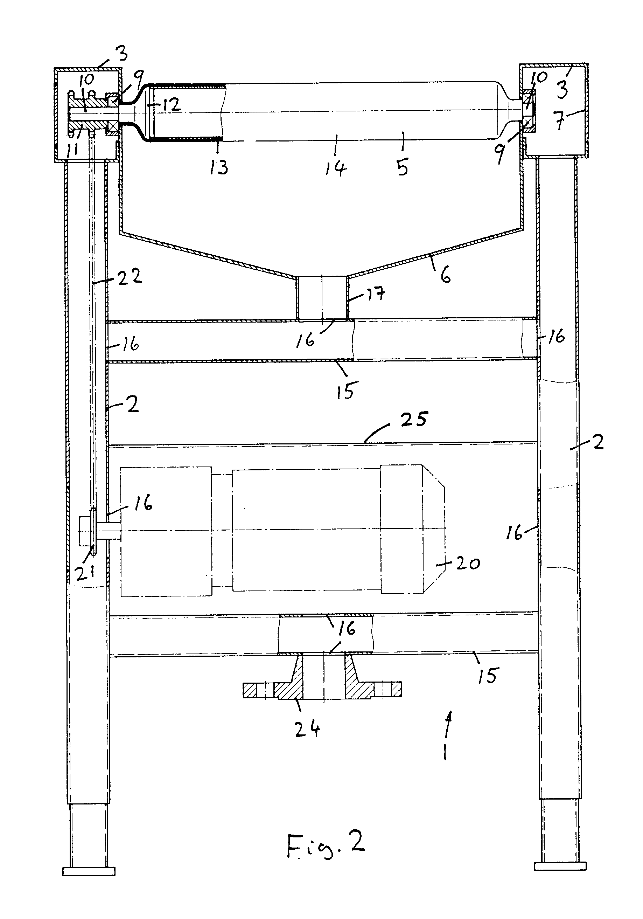

Das Ausführungsbeispiel nach Figur 2 unterscheidet sich dem Ersten dadurch, daß der Antrieb 20 oberhalb der Decke im Gerüst befestigt ist. Er ist von einem Gehäuse 25 umgeben, dessen Inneres über die Stützen 2 abgesaugt wird. Der Saugflansch 24 kann sich hierbei an jeder beliebigen Stelle der Hohlprofilkonstruktion befinden.

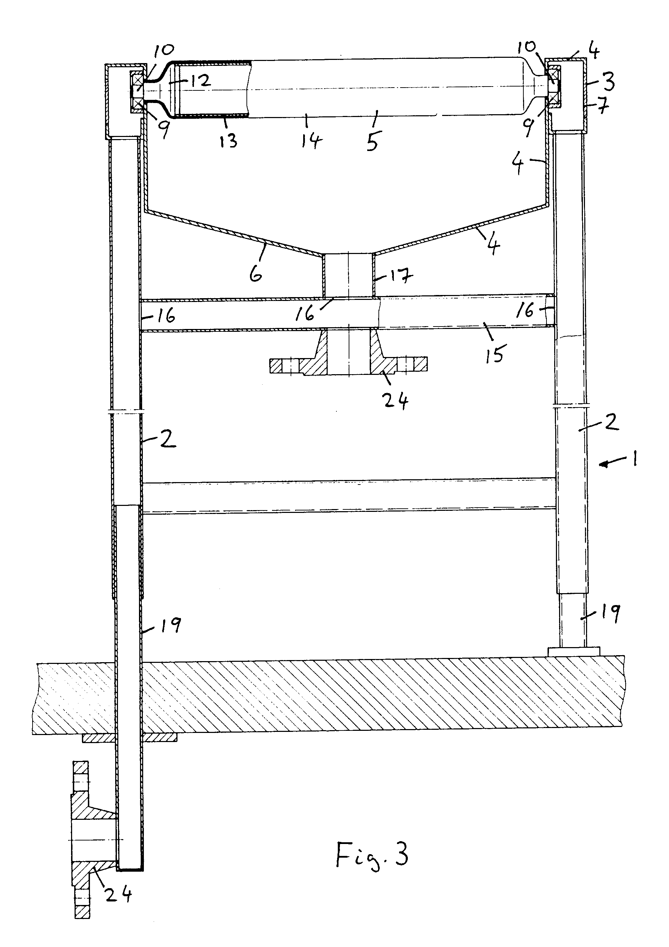

Das Ausführungsbeispiel nach Figur 3 zeigt eine nicht angetriebene Rolle, einen Flanschanschluß für die Absaugung am oberen Querholm 15 und einen weiteren Flanschanschluß am unteren Ende der Stütze 2, 19, die durch die Decke 18 gesteckt ist.

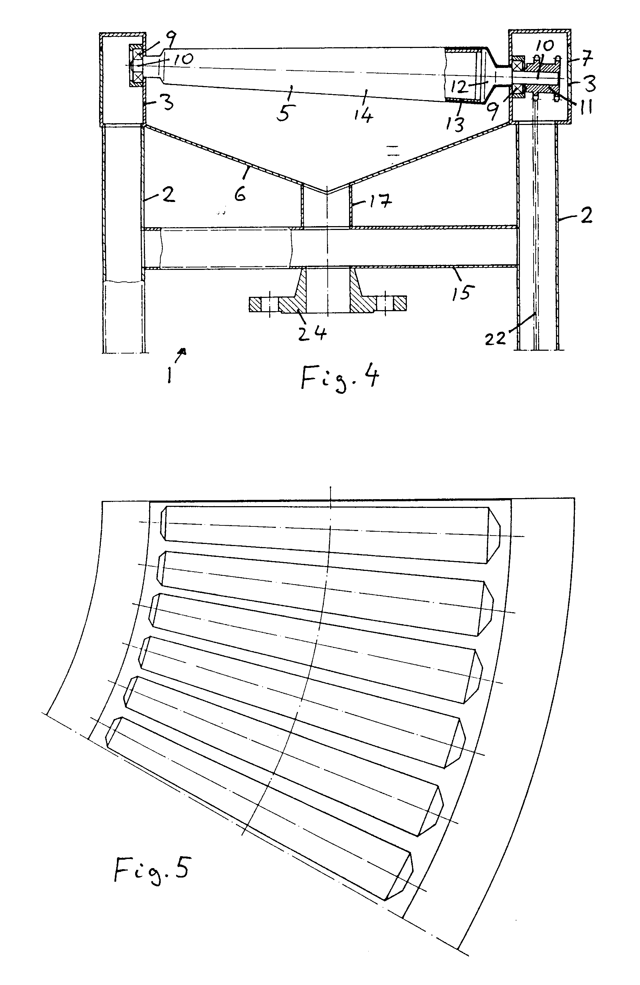

Die Figuren 4 und 5 zeigen dieselbe Konstruktionstechnik bei der Kurve einer Rollenbahn mit einem Flanschanschluß am oberen Querholm.

**Patentansprüche**

1. Angetriebene Rollenbahn, deren Rollen (5) an einen Gerüst (1) waagerecht oder geneigt gelagert sind, wobei alle Antriebsteile (11, 21, 22) zwischen dem antreibenden Motor (20) und den Rollen (5) von einem Gehäuse (3) oder von einem Hohlprofil des Gerüsts (1) insbesondere von einer hohlen Stütze (2) und/oder von einem hohlen Träger allseitig umschlossen ist (sind), an denen oder deren Innerem Unterdruck anliegt.

**2.** Angetriebene Rollenbahn nach Anspruch 1, **dadurch gekennzeichnet,** daß das Gerüst geschlossene Hohlprofile aufweist, die an den Unterdruck angeschlossen sind.

**3.** Angetriebene Rollenbahn nach Anspruch 1 oder 2, **dadurch gekennzeichnet,** daß die Lager (9) der Rollen (5) von ganz oder überwiegend geschlossenen Gehäusen (3) oder Profilen umgeben sind, an denen Unterdruck anliegt.

**4.** Angetriebene Rollenbahn nach einem der vorherigen Ansprüche, **dadurch gekennzeichnet,** daß die Stützen (2) und/oder Streben (15) des Gerüstes (1) Hohlprofile sind, an denen Unterdruck anliegt.

**5.** Angetriebene Rollenbahn nach einem der vorherigen Ansprüche, **dadurch gekennzeichnet,** daß unterhalb der Rollen (5) eine oder mehrere Wannen (6) befestigt sind, in deren oberer Öffnung die Rollen (5) liegen und in deren unterem Bereich Unterdruck herrscht.

**6.** Angetriebene Rollenbahn nach Anspruch 5, **dadurch gekennzeichnet,** daß der überwiegende Teil der Öffnungsfläche der Wanne (6) durch die Rollen (5) ausgefüllt ist.

**7.** Angetriebene Rollenbahn nach einem der vorherigen Ansprüche, **dadurch gekennzeichnet,** daß mindestens eine hohle Stütze (2) insbesondere durch den Boden (18) in den darunterliegenden Raum geführt und dort an Unterdruck angeschlossen ist.

**8.** Angetriebene Rollenbahn nach Anspruch 7, **dadurch gekennzeichnet,** daß in der hohlen Stütze (2) der Antrieb für die Rollen, insbesondere eine Endloskette (22), ein Endlosriemen oder eine Welle, einliegt.

**9.** Angetriebene Rollenbahn nach Anspruch 7 oder 8, **dadurch gekennzeichnet,** daß der Motor des Antriebes (20) im darunterliegenden Raum angeordnet ist.

**10.** Angetriebene Rollenbahn nach einem der vorherigen Ansprüche, **dadurch gekennzeichnet,** daß die Lager (9) der Rollen (5) beidseitig durch Abdichtungsringe abgedichtet sind.

**11.** Angetriebene Rollenbahn nach einem der vorherigen Ansprüche, **dadurch gekennzeichnet,** daß das die Rolle (5) antreibende Rad (5) über eine Rutschkupplung mit der Rolle (5) verbunden ist und sowohl Rad (11) als auch Rutschkupplung vom insbesondere durch Absaugen erzeugten Unterdruck umgeben sind.

**12.** Angetriebene Rollenbahn nach Anspruch 11, **dadurch gekennzeichnet,** daß auf einer Seite die mit dem Rollenzylinder drehfeste Achse (10) über das Lager (9) verlängert ist und das Antriebsrad (11) trägt.

**13.** Angetriebene Rollenbahn nach einem der vorherigen Ansprüche, **dadurch gekennzeichnet,** daß der Rollenmantel von einer insbesondere elektrisch leitfähigen Beschichtung (14) umgeben ist, die auf beiden Seiten bis zu den Lagerringen reicht.

**14.** Angetriebene Rollenbahn nach einem der vorherigen Ansprüche, **dadurch gekennzeichnet,** daß an etwa jeder Rollenachse (10) ein kleiner Hydraulikmotor oder Elektromotor, insbesondere ein Gleichstrommotor, als Antrieb befestigt ist.

**15.** Angetriebene Rollenbahn nach einem der Ansprüche 5 bis 14, **dadurch gekennzeichnet,** daß die Wandung der Wanne (6) zu den Rollenenden hochgeführt ist und zum überwiegenden Teil das die Rollenlager (9) umgebende Gehäuse bildet.

**16.** Angetriebene Rollenbahn nach Anspruch 15, **dadurch gekennzeichnet,** daß das Gehäuse (3) in Höhe der Rollen (5) einen Kanal bildet, der über mindestens eine darunter befestigte Hohlstütze (2) an das Absaugsystem angeschlossen ist.

**17.** Angetriebene Rollenbahn nach einem der Ansprüche 4 bis 16, **dadurch gekennzeichnet,** daß die senkrechten Stützen (2) im unteren Bereich teleskopartig ineinander schiebbar sind.

**18.** Angetriebene Rollenbahn nach einem der Ansprüche 4 bis 16, **dadurch gekennzeichnet,** daß zur Höhenverstellung spindelförmig ausgebildete Füße vorgesehen sind.

**Claims**

**1.** Live roller conveyor, the rollers (5) of which are mounted in horizontal or inclined position on a supporting structure (1), all drive parts (11, 21, 22) between the drive motor (20) and the rollers (5) being enclosed on all sides by an enclosure (3) or by a hollow section of the supporting structure (1), especially by a hollow rest (2) and/or by a hollow bearer, at which or in the interior of which a vacuum exists.

2. Live roller conveyor according to claim 1, **characterized in that** the supporting structure features closed hollow sections, which are connected to the vacuum.

3. Live roller conveyor according to claims 1 or 2, **characterized in that** the bearings (9) of the rollers (5) are encompassed by entirely or predominantly closed enclosures (3) or sections, at which a vacuum exists.

4. Live roller conveyor according to one of the previous claims, **characterized in that** the rests (2) and/or the braces (15) of the supporting structure (1) are hollow sections, at which a vacuum exists.

5. Live roller conveyor according to one of the previous claims, **characterized in that** one or several troughs (6) are fastened under the rollers (5), in the top opening of which the rollers (5) are arranged and in the bottom zone of which vacuum prevails.

6. Live roller conveyor according to claim 5, **characterized in that** the preponderant part of the opening surface of the troughs (6) is filled up by the rollers (5).

7. Live roller conveyor according to one of the previous claims, **characterized in that** at least one hollow rest (2) projects especially through the bottom (18) into the subjacent space and is connected there to vacuum.

8. Live roller conveyor according to claim 7, **characterized in that** the drive for the rollers, especially an endless chain (22), an endless belt or a shaft, is located in the hollow rest (2).

9. Live roller conveyor according to claims 7 or 8, **characterized in that** the motor of the drive (20) is arranged in the subjacent space.

10. Live roller conveyor according to one of the previous claims, **characterized in that** the bearings (9) of the rollers (5) are sealed on both sides by packing rings.

11. Live roller conveyor according to one of the previous claims, **characterized in that** the gear (11) which drives the roller (5) is connected by a slip clutch to the roller (5) and that both the drive gear (11) and the slip clutch are surrounded by the vacuum generated especially by suction.

12. Live roller conveyor according to claim 11, **characterized in that** the not rotatable shaft (10) with the roller cylinder extends beyond the bearing (9) and carries the driving gear (11).

13. Live roller conveyor according to one of the previous claims, **characterized in that** the roller tube is surrounded by an especially electrically conductive coating (14), which extends on both sides to the bearing rings.

14. Live roller conveyor according to one of the previous claims, **characterized in that** a small hydraulic motor or electric motor, especially a d.c. motor, is arranged on each roller shaft (10).

15. Live roller conveyor according to claims 5 to 14, **characterized in that** the wall of the trough (6) extends vertically to the roller ends and forms mainly the enclosure surrounding the roller bearings (9).

16. Live roller conveyor according to claim 15, **characterized in that** the enclosure (3) forms a channel at the level of the rollers (5), which is connected through at least one hollow rest (2) arranged underneath to the exhaust system.

17. Live roller conveyor according to one of claims 4 to 16, **characterized in that** the vertical rests (2) are telescopically extendable in the lower range.

18. Live roller conveyor according to one of claims 4 to 16, **characterized in that** spin-dle-shaped pedestals are provided for vertical adjustment purposes.

**Revendications**

1. Transporteur à rouleaux entraîné dont les rouleaux (5) sont montés horizontaux ou inclinés sur un châssis (1), toutes les pièces d'entraînement (11, 21, 22) entre le moteur d'entraînement (20) et les rouleaux (5) étant entourées de tout côté par un carter (3) ou par un profilé creux du châssis (1), en particulier par un pilier creux (2) et/ou par un support creux, sur lesquels ou à l'intérieur desquels règne une dépression.

2. Transporteur à rouleaux entraîné selon la revendication 1, caractérisé en ce que le châssis présente des profilés creux fermés qui sont reliés à la dépression.

3. Transporteur à rouleaux entraîné selon la revendication 1 ou 2,
   caractérisé en ce que les paliers (9) des rouleaux (5) sont entourés de carters (3) ou de profilés complètement ou principalement fermés auxquels est appliquée une dépression.

4. Transporteur à rouleaux entraîné selon l'une des revendications précédentes,
   caractérisé en ce que les piliers (2) et/ou étais (15) du châssis (1) sont des profilés creux auxquels est appliquée une dépression.

5. Transporteur à rouleaux entraîné selon l'une des revendications précédentes,
   caractérisé en ce qu'une ou plusieurs cuves (6) sont fixées au-dessous des rouleaux (5), dans l'ouverture supérieure desquelles se trouvent les rouleaux (5) et dans la zone inférieure desquelles règne une dépression.

6. Transporteur à rouleaux entraîné selon la revendication 5,
   caractérisé en ce que la partie prépondérante de la surface d'ouverture de la cuve (6) est remplie par les rouleaux (5).

7. Transporteur à rouleaux entraîné selon l'une des revendications précédentes,
   caractérisé en ce qu'au moins un pilier creux (2) est guidé à travers le plancher (18) dans le volume se trouvant en-dessous et y est raccordé à une dépression.

8. Transporteur à rouleaux entraîné selon la revendication 7,
   caractérisé en ce que l'entraînement par les rouleaux, en particulier une chaîne sans fin (22), une courroie sans fin ou un arbre, est logé dans le pilier creux (2).

9. Transporteur à rouleaux entraîné selon la revendication 7 ou 8,
   caractérisé en ce que le moteur de l'entraînement (20) est disposé dans le volume se trouvant en-dessous.

10. Transporteur à rouleaux entraîné selon l'une des revendications précédentes,
    caractérisé en ce que les paliers (9) des rouleaux (5) sont rendus étanches des deux côtés par des bagues d'étanchéité.

11. Transporteur à rouleaux entraîné selon l'une des revendications précédentes,

caractérisé en ce que la roue (5) entraînant le rouleau (5) est reliée aux rouleaux par un accouplement à glissement et qu'aussi bien la roue (11) que l'accouplement à glissement sont entourés par une dépression créée en particulier par aspiration.

12. Transporteur à rouleaux entraîné selon la revendication 11,
    caractérisé en ce que l'axe (10) solidaire en rotation du cylindre de rouleau est prolongé d'un côté au-dessus du palier (9) et porte la roue d'entraînement (11).

13. Transporteur à rouleaux entraîné selon l'une des revendications précédentes,
    caractérisé en ce que la chemise du rouleau est entourée par un revêtement (14), en particulier conducteur de l'électricité, qui arrive des deux côtés jusqu'aux bagues de palier.

14. Transporteur à rouleaux entraîné selon l'une des revendications précédentes,
    caractérisé en ce qu'un petit moteur hydraulique ou moteur électrique, en particulier un moteur à courant continu est installé sur à peu près chaque axe (10) de rouleau en tant qu'entraînement.

15. Transporteur à rouleaux entraîné selon l'une des revendications 5 à 14,
    caractérisé en ce que la paroi de la cuve (6) est prolongée vers le haut jusqu'aux extrémités des rouleaux et forme pour la partie prépondérante le carter entourant les paliers (9) de rouleaux.

16. Transporteur à rouleaux entraîné selon la revendication 15,
    caractérisé en ce que le carter (3) forme à la hauteur des rouleaux (5) un canal qui est raccordé au système d'aspiration au moins par l'intermédiaire d'un pilier creux (2) fixé en-dessous.

17. Transporteur à rouleaux entraîné selon l'une des revendications 4 à 16,
    caractérisé en ce que les piliers verticaux (2) sont, dans la zone inférieure, coulissants l'un dans l'autre de manière télescopique.

18. Transporteur à rouleaux entraîné selon l'une des revendications 4 à 16,
    caractérisé en ce que des pieds réalisés en forme de pivots sont prévus pour le réglage en hauteur.

Fig.1

Fig. 2

Fig. 3

Fig. 4

Fig. 5